# EUROPÄISCHE PATENTSCHRIFT

(11) **EP 2 390 119 B1**
(45) Veröffentlichungstag und Bekanntmachung des Hinweises auf die Patenterteilung: **04.07.2018**
(21) Anmeldenummer: 11167403.2
(22) Anmeldetag: 25.05.2011
(51) Int. Cl.: B60D 1/48

(54) **Heckanbauvorrichtung**
Rear attachment device
Dispositif de montage à l'arrière

(30) Priorität: 27.05.2010 DE 102010029394
(43) Veröffentlichungstag der Anmeldung: 30.11.2011
(73) Patentinhaber: Bosal ACPS Holding 2 B.V., 4131 PK Vianen (NL)
(72) Erfinder: Riehle, Jörg, 71679, Asperg (DE); Haller, Andreas, 71665, Vaihingen (DE); Pechhold, Frank, 71642, Ludwigsburg (DE); Wegner, Bert, 73333, Gingen (DE)
(74) Vertreter: Hoeger, Stellrecht & Partner Patentanwälte mbB

(56) Entgegenhaltungen:
- EP-A1- 1 445 126
- DE-A1-102004 008 740
- DE-A1-102004 008 741
- DE-C1- 10 061 491
- US-A- 6 010 142
- US-B1- 6 348 112

## Beschreibung

Die Erfindung betrifft eine Heckanbauvorrichtung für Fahrzeuge mit einer Fahrzeugkarosserie, wobei die Heckanbauvorrichtung einen sich quer zu einer Längsmittelebene der Fahrzeugkarosserie erstreckenden Querträger umfasst, an welchem eine Lastaufnahmeeinheit montierbar ist und an Endbereichen des Querträgers gehaltene Seitenträger, mittels welchen der Querträger mit der Fahrzeugkarosserie verbindbar ist.

Derartige Heckanbauvorrichtungen sind aus dem Stand der Technik bekannt, beispielsweise aus der EP 1445 126 A1, die den Oberbegriff des Anspruchs 1 zeigt. Bei diesen Heckanbauvorrichtungen ist der Querträger als geschweißtes Teil aus gewalztem oder gezogenem Profilmaterial ausgebildet, wobei die Form des Querträgers durch Biegen und/oder Schweißen und/oder zusätzliches Anbringen weiterer Elemente hergestellt wird.

Ein derart hergestellter Querträger lässt sich entweder nur schwer an komplexe Bauraumgeometrien anpassen oder ist aufwändig herzustellen.

Der Erfindung liegt daher die Aufgabe zugrunde, eine Heckanbauvorrichtung für Fahrzeugkarosserien derart zu verbessern, dass diese einerseits einfach und kostengünstig herstellbar ist und andererseits an die jeweilige Bauraumgeometrie optimal anpassbar ist, insbesondere auch im Hinblick auf ihre Stabilitäts- und Steifigkeitseigenschaften.

Diese Aufgabe wird bei einer Heckanbauvorrichtung der eingangs beschriebenen Art erfindungsgemäß durch die Merkmale des Anspruchs 1 gelöst. Der Vorteil der erfindungsgemäßen Lösung ist darin zu sehen, dass damit die Möglichkeit besteht, die Form des Querträgers optimal an die gegebenen Verhältnisse anzupassen und auch die gesamten am Querträger vorgesehenen Elemente bei der einstückigen Herstellung des Querträgers an diese anzuformen.

Insbesondere lassen sich dabei die Tragstegbereiche des Querschnittsprofils optimal an die jeweiligen Lasten und dynamischen Beanspruchungen anpassen.

Eine vorteilhafte Ausführungsform sieht dabei vor, dass das Querschnittsprofil U-ähnlich ist.

Eine andere vorteilhafte Lösung sieht vor, dass das Querschnittsprofil T-ähnlich ausgebildet ist.

Wieder eine andere Ausführungsform sieht vorteilhafterweise vor, dass das Querschnittsprofil L-ähnlich ausgebildet ist.

Eine weitere alternative Ausführungsform sieht vor, dass das Querschnittsprofil V-ähnlich ausgebildet ist.

Es besteht aber auch die Möglichkeit, in Abwandlung einer U-Form, das Querschnittsprofil ähnlich einem Kreissegment auszubilden.

Um den Querträger gießtechnisch besonders einfach herstellen zu können, ist vorzugsweise vorgesehen, dass das Querschnittsprofil mindestens einen zu einer Seite hin offenen Profilinnenraum aufweist, vorzugsweise diesen Profilinnenraum bis auf die offene Seite umschließt.

Besonders günstig ist es, insbesondere zum Entformen des gießtechnisch hergestellten Querträgers, wenn ausgehend von der offenen Seite der Profilinnenraum hinterschneidungsfrei ausgebildet ist.

Noch vorteilhafter ist es dabei, wenn der Profilinnenraum zur offenen Seite hin sich erweiternd ausgebildet ist.

Eine weitere besonders günstige Ausführungsform einer erfindungsgemäßen Heckanbauvorrichtung sieht vor, dass das Gussteil mindestens zwei quer zueinander verlaufende und sich von einem Endbereich zum anderen Endbereich erstreckende Tragstegbereiche umfasst.

Eine derartige Konzeption des Gussteils aus mindestens zwei quer zueinander verlaufenden Tragstegbereichen schafft eine hohe Stabilität.

Vorzugsweise ist dabei vorgesehen, dass mindestens einer der Tragstegbereiche mit seiner Breitenausdehnung im Wesentlichen quer zu einer Fahrtrichtung verläuft.

Alternativ oder ergänzend hierzu ist vorgesehen, dass mindestens einer der Tragstegbereiche mit seiner Breitenausdehnung ungefähr parallel zur Fahrtrichtung verläuft.

Noch vorteilhafter ist eine Lösung, bei welcher das Gussteil mindestens drei Tragstegbereiche aufweist, die sich von einem Endbereich zum anderen Endbereich erstrecken und insbesondere einstückig ineinander übergehen.

Vorzugsweise können dabei von den mindestens drei Tragstegbereichen zwei Tragstegbereiche quer zu einem dritten Tragstegbereich verlaufen.

Ferner ist vorteilhafterweise vorgesehen, dass die Tragstegbereiche durch Wandbereiche gebildet sind, deren Breitenausdehnung größer als eine Wanddicke derselben ist.

Um insbesondere die bei einem erfindungsgemäß eingesetzten Querträger auftretenden Kräfte optimal aufnehmen zu können, ist dabei vorgesehen, dass der Querträger mindestens einen sich mit seiner Breitenausdehnung in ungefähr vertikaler Richtung erstreckenden Tragstegbereich aufweist.

Ein derartiger Tragstegbereich des Querträgers schafft die Möglichkeit, besonders optimal Stützlasten aufzunehmen.

Ferner ist vorzugsweise vorgesehen, dass der Querträger mindestens einen sich mit seiner Breitenausdehnung ungefähr in horizontaler Richtung erstreckenden Tragstegbereich aufweist und ein derartiger Tragstegbereich schafft die Möglichkeit, möglichst optimal Zuglasten aufzunehmen.

Um den Querträger möglichst gewichtsparend ausbilden zu können, ist vorgesehen, dass das Querschnittsprofil zwischen einem Mittenbereich und den Endbereichen variiert, so dass durch die Variation des Querschnittsprofils eine optimale Anpassung an die auf den Querträger wirkenden Lasten erfolgen kann, ohne unnötig wiederum zum Gewicht des Querträgers beitragendes Material vorzusehen.

Eine Möglichkeit einer derartigen Variation des Querschnittsprofils sieht vor, dass das Querschnittsprofil in dem Mittenbereich in einer ersten Richtung eine geringere Ausdehnung aufweist als in den Endbereichen.

Die erste Richtung kann dabei vorzugsweise ungefähr parallel zur Fahrtrichtung verlaufen.

Es ist aber auch denkbar, dass die erste Richtung quer zur Fahrtrichtung, das heißt ungefähr in vertikaler Richtung verläuft.

Darüber hinaus sieht eine vorteilhafte Lösung vor, dass mindestens einer der Tragstegbereiche des Querschnittsprofils an den Endbereichen eine geringere Wandstärke aufweist als in dem Mittenbereich.

Hinsichtlich der Gesamtform des Querträgers wurden bislang keine näheren Angaben gemacht.

So sieht eine vorteilhafte Lösung vor, dass der Querträger in seiner Einbauanlage an der Karosserie zwischen den Endbereichen nach oben gekrümmt ist, das heißt, dass der Mittenbereich des Querträgers in größerem Abstand von einer Fahrbahn verläuft als die Endbereiche.

Eine derartige Lösung hat den Vorteil, dass sich mit dieser Stützlasten optimal aufnehmen lassen.

Eine andere vorteilhafte Lösung sieht vor, dass der Querträger in seiner Einbaulage an der Karosserie zwischen den Endbereichen entgegengesetzt zur Fahrtrichtung nach hinten gekrümmt ist.

Eine derartige Lösung hat den Vorteil, dass sie sich optimal an Karosserieformen anpassen lässt, da die Karosserie in der Regel ebenfalls im Bereich ihrer Heckschürze nach hinten konvex verläuft, so dass damit der Einbauraum, der für den Querträger benötigt wird, minimiert werden kann.

Grundsätzlich wäre es denkbar, den Querträger auch mit einer Aufnahme für eine Lastaufnahmeeinheit auszubilden.

Dies würde jedoch eine komplizierte Gussformgebung erfordern, die kostenträchtig ist.

Aus diesem Grund sieht eine vorteilhafte Lösung vor, dass an dem Querträger in dem Mittenbereich mindestens ein Montageanschlussbereich einstückig angeformt ist.

Ein derartiger Montageanschlussbereich vereinfacht die Formgebung des Querträgers und schafft außerdem die Möglichkeit, unterschiedlichste Aufnahmen für Lastaufnahmeeinheiten an dem Querträger als Module zu montieren.

Ein derartiger Montageanschlussbereich kann im einfachsten Fall als Durchbruch mit einer Anlagefläche ausgebildet sein, an welchen sich durch Schrauben oder andere Befestigungselemente eine Aufnahme fixieren lässt.

Eine besonders günstige Lösung sieht jedoch vor, dass der Montageanschlussbereich einen Schraubanschlussbereich umfasst.

In einem vorteilhaften Fall der Schraubanschlussbereich als Anschraubdom ausgebildet ist.

Hinsichtlich der Verbindung des Querträgers mit den Seitenträgern wurden ebenfalls bislang keine näheren Angaben gemacht.

Um die Seitenträger einfach montieren zu können, ist vorzugsweise vorgesehen, dass an den Endbereichen des Querträgers Anlageflächen für die Seitenträger einstückig angeformt sind.

Derartige Anlageflächen für die Seitenträger sind dabei insbesondere von einstückig an die Tragstegbereiche angeformten Montagestegbereichen gebildet, welche einerseits ein Anlegen der Seitenträger an den Anlageflächen erlauben, andererseits so ausgebildet sind, dass an diesen die Seitenträger in einfacher Weise montierbar sind.

Vorzugsweise ist dabei vorgesehen, dass die Montagestegbereiche sich quer zu den Tragstegbereichen erstrecken und diese dabei miteinander verbinden.

Um insbesondere eine stabile Verbindung mit den Seitenträgern zu erlauben, ist vorzugsweise vorgesehen, dass sich die Montagestegbereiche über das Querschnittsprofil des Querträgers in den Endbereichen hinaus erstrecken und somit eine verbesserte Fixierung, insbesondere eine kippfeste Fixierung an den Seitenträgern erlauben.

Insbesondere erstrecken sich dabei die Montagestegbereiche in Richtung der Seitenträger über das Querschnittsprofil des Querträgers hinaus.

Um die Montagestegbereiche in einfacher Weise mit den Seitenträgern verbinden zu können, sind zusätzlich Schraubanschlussbereiche an diesen vorgesehen.

Vorzugsweise sind dabei die Schraubanschlussbereiche als Schraubanschlussdome ausgebildet.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines Kraftfahrzeugs mit einer Fahrzeugkarosserie und einer Heckanbauvorrichtung für eine Anhängekupplung als Lastaufnahmeeinheit;
- Fig. 2: eine perspektivische Darstellung eines ersten Ausführungsbeispiels der erfindungsgemäßen Heckanbauvorrichtung;
- Fig. 3: eine Draufsicht in Richtung des Pfeils A in Fig. 2 auf das erste Ausführungsbeispiel der erfindungsgemäßen Heckanbauvorrichtung;
- Fig. 4: eine Ansicht von hinten in Richtung des Pfeils B in Fig. 2;
- Fig. 5: eine perspektivische Seitenansicht des erfindungsgemäßen als Gussteil ausgebildeten Querträgers mit einer an dem Querträger montierten Aufnahme für eine Lastaufnahmeeinheit;
- Fig. 6: einen Schnitt längs Linie 6-6 in Fig. 4;
- Fig. 7: einen Schnitt längs Linie 7-7 in Fig. 4;
- Fig. 8: einen Schnitt längs Linie 8-8 in Fig. 4;
- Fig. 9: einen Schnitt längs Linie 9-9 in Fig. 3;
- Fig. 10: einen Schnitt längs Linie 10-10 in Fig. 4;
- Fig. 11: einen Schnitt ähnlich Fig. 8 durch ein zweites Ausführungsbeispiel einer erfindungsgemäßen Heckanbauvorrichtung;
- Fig. 12: einen Schnitt ähnlich Fig. 8 durch ein drittes Ausführungsbeispiel einer erfindungsgemäßen Heckanbauvorrichtung;
- Fig. 13: einen Schnitt ähnlich Fig. 8 durch ein viertes Ausführungsbeispiel einer erfindungsgemäßen Heckanbauvorrichtung;
- Fig. 14: einen Schnitt ähnlich Fig. 8 durch ein fünftes Ausführungsbeispiel einer erfindungsgemäßen Heckanbauvorrichtung und
- Fig. 15: einen Schnitt ähnlich Fig. 8 durch ein sechstes Ausführungsbeispiel einer erfindungsgemäßen Heckanbauvorrichtung.

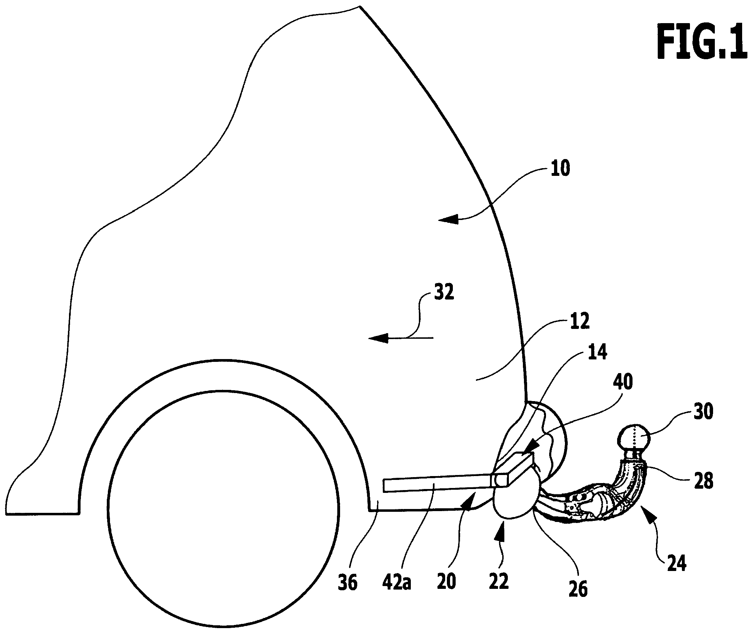

Ein in Fig. 1 dargestelltes Ausführungsbeispiel eines erfindungsgemäßen Kraftfahrzeugs umfasst eine Fahrzeugkarosserie 10, welche an ihrem Heckbereich 12, und zwar insbesondere im Bereich einer unteren Heckschürze 14 mit einer als Ganzes mit 20 bezeichneten Heckanbauvorrichtung versehen ist, an welcher beispielsweise mittels einer Schwenklagereinheit 22 ein als Ganzes mit 24 bezeichneter Kugelhals mit einem erste Ende 26 gehalten ist, welcher an einem zweiten Ende 28 eine als Ganzes mit 30 bezeichnete Kupplungskugel trägt.

Dabei umfasst die Heckanbauvorrichtung 20 einen sich quer zu einer Fahrtrichtung 32 und somit auch quer zu einer Längsmittelebene 34 erstreckenden Querträger 40, welcher mit Seitenträgern 42a und 42b an einem hinteren Karosseriebereich 36, der sich an die untere Heckschürze 14 anschließt, gehalten ist, wobei sich die Seitenträger 42a und 42b ungefähr in Fahrtrichtung erstrecken.

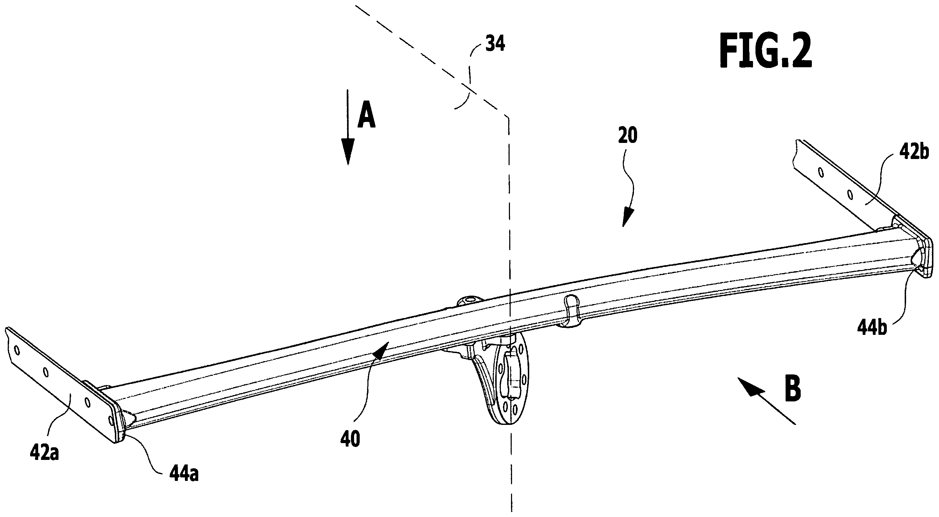

Wie in Fig. 2 dargestellt, liegt der Querträger 40 zwischen den Seitenteilen 42a und 42b, wobei Endbereiche 44a und 44b des Querträgers 40 mit den Seitenträgern 42 verbunden sind, wie nachfolgend noch im Detail beschrieben.

Der Querträger 40 umfasst an seinen Endbereichen 44a und 44b jeweils einen Montagestegbereich 46a und 46b, welche sich jeweils ungefähr parallel zu den Seitenträgern 42a und 42b erstreckt und jeweils Anlageflächen 48a und 48b aufweist, an welchen die Seitenträger 42 flächig anlegbar sind.

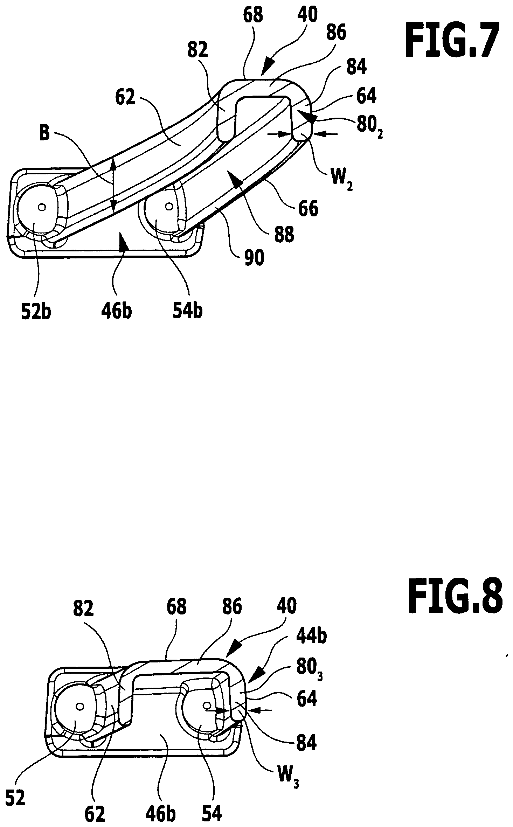

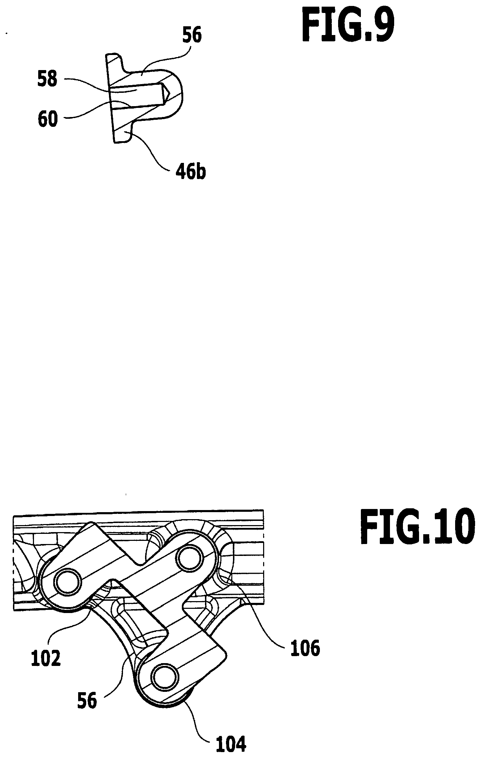

Ferner umfassen die Montagestegbereiche 46a und 46b wie insbesondere in den Fig. 7 und 8 erkennbar, Schraubanschlussbereiche 52 und 54, die als Schraubanschlussdome 56 ausgebildet sind und dabei jeweils ausgehend von dem entsprechenden Montagestegbereich 46 ein Sackloch 58 mit einem in dieses eingeschnittenen Schraubgewinde 60 bilden, wie in Fig. 9 dargestellt.

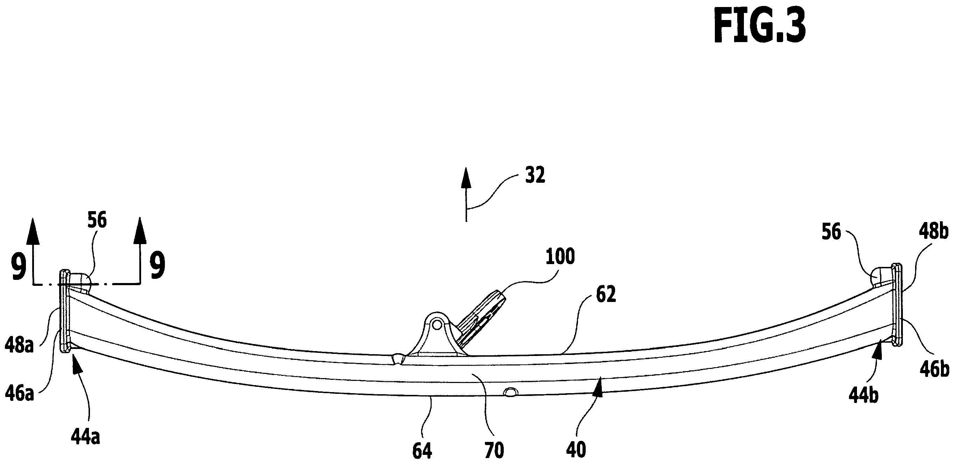

Der sich zwischen den Montagestegbereichen 46a und 46b erstreckende Querträger 40 ist dabei - in Fahrtrichtung 32 gesehen - in Draufsicht, wie in Fig. 3 dargestellt, auf seiner in Fahrtrichtung vorderen Seite mit einer konkaven Kontur 62 versehen und auf seiner in Fahrtrichtung 32 hinteren Seite mit einer konvexen Kontur 64, wobei die konkave Kontur 62 und die konvexe Kontur 64 nicht identisch sind, so dass deren Abstand im Verlauf der Erstreckung des Querträgers 40 von einem Montagestegbereich 46a, b zum anderen Montagestegbereich 46b, a variiert.

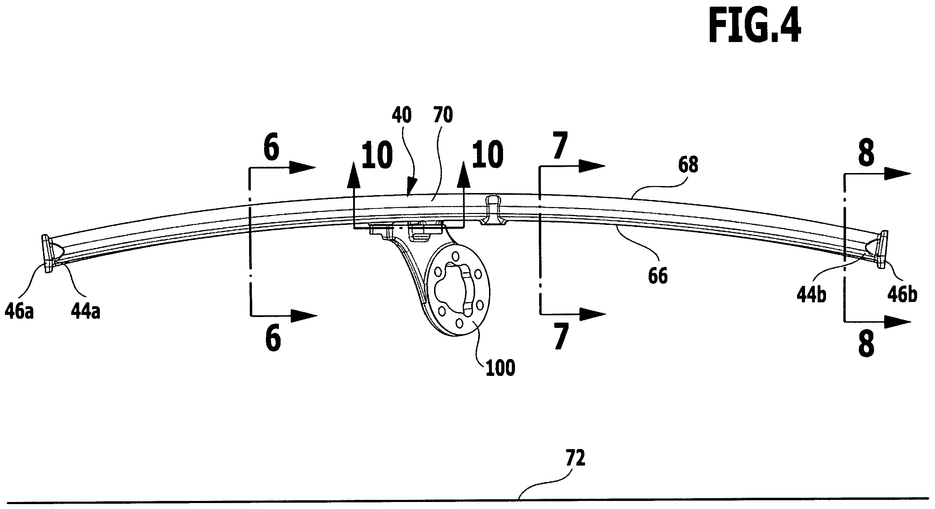

Darüber hinaus ist der Querträger 40, wie in Fig. 4 dargestellt, in Projektion auf eine quer und senkrecht zur Fahrtrichtung 32 verlaufende vertikale Ebene mit einer konkaven Unterlinie 66 und mit einer konvexen Oberlinie 68 versehen, das heißt, dass der Querträger 40 zwischen den Montagestegbereichen 46a und 46b nach oben verläuft, das heißt ausgehend von den Montagestegbereichen 46a und 46b bis zu einem Mittenbereich 70 sich zunehmend von einer Fahrbahn 72 entfernt, so dass der Mittenbereich 70 einen größeren Abstand von der Fahrbahn 72 aufweist als die Endbereiche 44a und 44b mit den Montagestegbereichen 46a und 46b.

Insbesondere ist der Mittenbereich 70 relativ zu den symmetrisch zur Längsmittelebene 34 der Karosserie 10 angeordneten Montagestegbereichen 46a und 46b entgegengesetzt zur Fahrtrichtung 32 nach hinten und oben versetzt angeordnet.

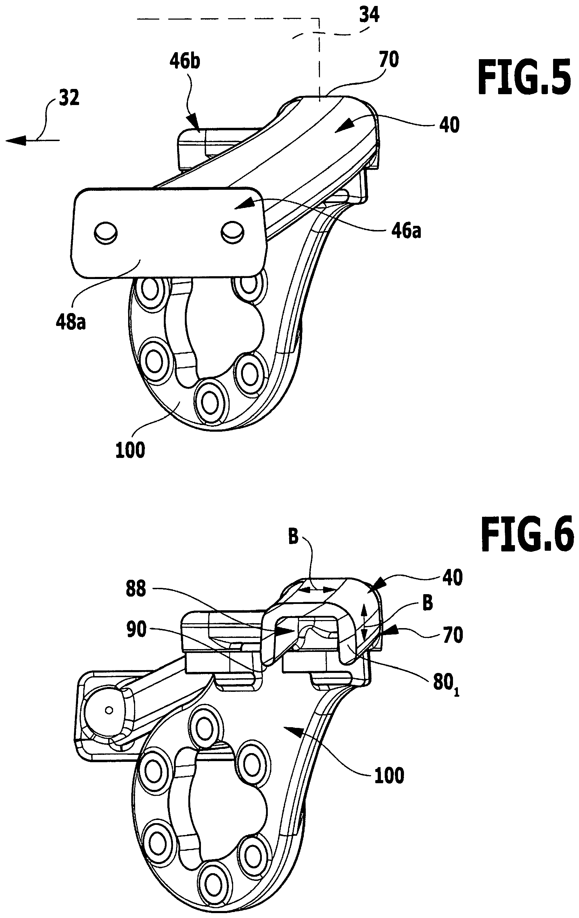

Wie in Fig. 6, 7 und 8 dargestellt, ist der Querträger mit einem umgekehrt U-förmigen Querschnittsprofil 80 versehen, welches durch einen vorderen Tragstegbereich 82 und einen hinteren Tragstegbereich 84 gebildet ist, die die beiden seitlichen Schenkel des U bilden und die durch einen mittleren Tragstegbereich 86 verbunden sind, welcher den Mittelschenkel des U bildet.

Die Tragstegbereiche 82 und 84 verlaufen dabei ungefähr parallel zueinander, das heißt sie weichen von einem parallelen Verlauf maximal mit einem Winkel von 15° voneinander ab, während der mittlere Tragstegbereich 86 quer zu dem vorderen Tragstegbereich 82 und dem hinteren Tragstegbereich 84 verläuft, vorzugsweise näherungsweise senkrecht zu diesen.

Die Tragstegbereiche 82, 84 und 86 umschließen einen Innenraum 88 welcher auf einer dem mittleren Tragstegbereich gegenüberliegenden Seite 90 offen ist, so dass der Querträger sich zur Herstellung als Gussteil eignet.

Insbesondere erstreckt sich der Innenraum 88 ausgehend von der offenen Seite 90 hinterschneidungsfrei bis zum mittleren Tragstegbereich 86, so dass der Querträger 40 leicht entformbar ist.

Beispielsweise ist der mittlere Tragstegbereich 86 so angeordnet, dass er sich im Wesentlichen parallel zur Fahrtrichtung 32 erstreckt, das heißt mit diesem maximal einen Winkel von ± 15° einschließt, während sich der vordere Tragstegbereich 82 und der hintere Tragstegbereich 84 mit ihrer Breitenausdehnung B quer, das heißt im Wesentlichen senkrecht zu der Fahrtrichtung 32 erstrecken, das heißt mit dieser einen Winkel im Bereich zwischen 75 und 105° einschließen.

Insbesondere verlaufen die Tragstegbereiche 82 und 84 mit ihrer Breitenausdehnung im Wesentlichen vertikal und der Tragstegbereich 86 im Wesentlichen horizontal, das heißt sie schließen mit einer Vertikalen bzw. Horizontalen einen Winkel im Bereich zwischen ± 15° ein.

Bei einer derartigen Ausführung des Querträgers 40 gemäß dem ersten Ausführungsbeispiel bildet der vordere Tragstegbereich 82 die konkave Kontur 62, während der hintere Tragstegbereich 84 die konvexe Kontur 64 bildet.

Ferner bilden der vordere und der hintere Tragstegbereich 82 und 84 die konkave Unterlinie 66 und der mittlere Tragstegbereich 86 bildet die konvexe Oberlinie 68.

Dabei ist das Querschnittsprofil 80 hinsichtlich seiner Wanddicke W variierend ausgebildet.

Beispielsweise liegt die Wanddicke W₂ des Querschnittsprofils 80₂ im Mittenbereich 70 bei Werten, die größer sind als die Wanddicke W₃ des Querschnittsprofils 80₃ in dem Endbereich 44b, während umgekehrt das Querschnittsprofil 80₂ im Mittenbereich 70 eine geringere Ausdehnung, das heißt insbesondere eine geringere Ausdehnung des mittleren Tragstegbereichs 86 aufweist als das Querschnittsprofil 80₃ nahe des Endbereichs 44, wie in Fig. 8 dargestellt, denn das Querschnittsprofil 80₃ weist insbesondere eine größere Breitenausdehnung B des mittleren Tragstegbereichs 86 auf.

Wie insbesondere in Fig. 7 und 8 erkennbar, bildet der Querträger 40 mit den Tragstegbereichen 82, 84 und 86 sowie den Montagestegbereichen 46 und den Schraubanschlussbereichen 52 und 54 insbesondere mit den Schraubanschlussdomen 56 ein einstückig als Gussteil hergestelltes Teil, wobei die Schraubanschlussdome 56 nicht nur an die Montagestegbereiche 46 angeformt sind, sondern auch zumindest an die Tragstegbereiche 82 und 84 und gegebenenfalls auch an den Tragstegbereich 86 und somit stellt der Querträger ein einstückig als Gussteil hergestelltes Teil mit integraler Stabilität dar, wobei zur Stabilität bei minimiertem Gewicht auch die Variation der Querschnittsprofile 80 über die Ausdehnung des Querträgers 40 zwischen dem jeweiligen Montagestegbereich 46 und dem Mittenbereich 70 sowohl hinsichtlich der Wandstärke W als auch der Gesamtausdehnung, insbesondere der Breitenausdehnung B des mittleren Tragstegbereichs 86, beiträgt.

An dem Mittenbereich 70 könnte beispielsweise eine Aufnahme 100 für die Schwenklagereinheit 22 angeformt sein.

Weit vorteilhafter ist es jedoch, wenn die Aufnahme 100 als separates Teil ausgebildet ist, welches, wie in Fig. 6 und Fig. 10 dargestellt, mit Montageanschlussbereichen 102, 104 und 106 verbunden ist, die ebenfalls einstückig an den Mittenbereich 70 des Querträgers 40 angeformt sind und beispielsweise ebenfalls Schraubanschlussdome 56 bilden, die integraler Bestandteil der Montageanschlussbereiche 102, 104 und 106 sind.

Damit lässt sich die Aufnahme 100 in Anpassung an die jeweilige Lastaufnahmeeinheit, das heißt beispielsweise die jeweilige Schwenklagereinheit 22 mit dem jeweiligen Kugelhals 24, ausbilden, ohne dass bei einer Änderung der Lastaufnahmeeinheit eine Änderung des Querträgers 40 hinsichtlich seiner Formgestaltung erforderlich ist.

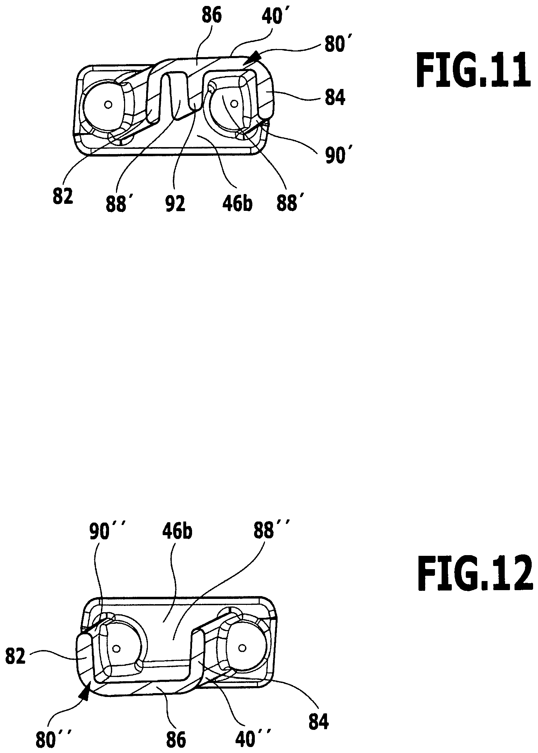

Bei einem zweiten Ausführungsbeispiel eines erfindungsgemäßen Querträgers 40', dargestellt in Fig. 11, ist das Querschnittsprofil 80' ungefähr E-förmig ausgebildet und weist somit zusätzlich zu den Tragstegbereichen 82 und 84 einen weite4ren Tragstegbereich 92 auf, der zwischen den Tragstegbereichen 82 und 84 liegt, während der mittlere Tragstegbereich 86 die Tragstegbereiche 82, 84 und 92 miteinander verbindet.

Bei einem dritten Ausführungsbeispiel eines erfindungsgemäßen Querträgers 40" - dargestellt in Fig. 12 - ist das Querschnittsprofil 80" U-förmig ausgebildet, das heißt genau umgekehrt wie das erste Ausführungsbeispiel, so dass diesbezüglich auf die Ausführungen zum ersten Ausführungsbeispiel vollinhaltlich Bezug genommen werden kann, wobei allerdings bei diesem Querschnittsprofil 80" der mittlere Tragstegbereich 86 der in Einbaulage des Querträgers unten liegende Tragstegbereich ist.

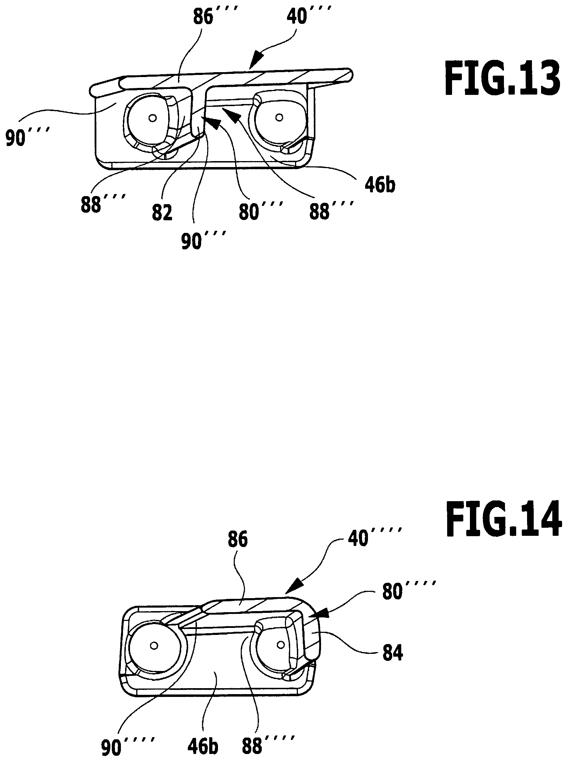

Bei einem vierten Ausführungsbeispiel eines erfindungsgemäßen Querträgers 40''' - dargestellt in Fig. 13 - ist das Querschnittsprofil 80''' so ausgebildet, dass dieses einen nur den Tragstegbereich 82 aufweist und dass der Tragstegbereich 86''' sich beiderseits über den Tragstegbereich 82 hinaus erstreckt, so dass der Tragstegbereich 86''' zusammen mit dem Tragstegbereich 82 eine ungefähr T-förmige Querschnittsform bildet.

Bei einem fünften Ausführungsbeispiel des erfindungsgemäßen Querträgers 40"", dargestellt in Fig. 14, ist der Querträger 40"" lediglich durch die Tragstegbereiche 84 und 86 gebildet und somit ungefähr winkel- oder L-förmig.

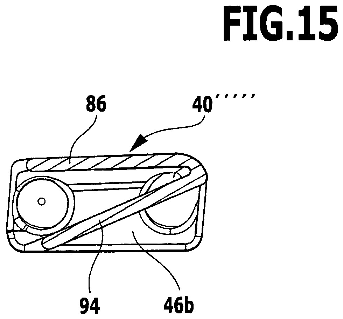

Bei einem sechsten Ausführungsbeispiel eines erfindungsgemäßen Querträgers 40""', dargestellt in Fig. 15, ist zusätzlich zum Tragstegbereich 86 noch ein schräg zu diesem verlaufender Tragstegbereich 94 vorgesehen, so dass die beiden Tragstegbereiche 86 und 94 ungefähr V-förmig, das heißt mit einem spitzen Winkel relativ zueinander verlaufen.

Sind bei dem zweiten bis sechsten Ausführungsbeispiel all diejenigen Teile des jeweiligen Querträgers 40, die mit denen des ersten Ausführungsbeispiels identisch sind, mit denselben Bezugszeichen versehen, so dass hinsichtlich der Erläuterung derselben vollinhaltlich zu den Ausführungen im Zusammenhang mit dem ersten Ausführungsbeispiel Bezug genommen werden kann.

## Patentansprüche

1. Heckanbauvorrichtung für eine Fahrzeugkarosserie umfassend einen sich quer zu einer Längsmittelebene (34) der Fahrzeugkarosserie (10) erstreckenden Querträger (40), an welchem eine Lastaufnahmeeinheit (20, 22) montiert ist, und an Endbereichen (44) des Querträgers (40) gehaltene Seitenträger (42), mittels welchen der Querträger (40) mit der Fahrzeugkarosserie (10) verbunden wird,
**dadurch gekennzeichnet, dass** der Querträger als Gussteil ausgebildet ist, dass das Gussteil aus miteinander einstückig verbundenen Tragstegbereichen (82, 84, 86, 88, 89) gebildet ist, die ein Querschnittsprofil (80) des Gussteils ergeben, welches zwischen dem Mittenbereich (70) und den Endbereichen (44) zu einer Seite (90) hin offen ist, und dass das Querschnittsprofil (80) zwischen einem Mittenbereich (70) und den Endbereichen (44) variiert, dass das Querschnittsprofil (80) in dem Mittenbereich (70) in einer ersten Richtung eine geringere Ausdehnung aufweist als in den Endbereichen (44).

2. Heckanbauvorrichtung nach einem der voranstehenden Ansprüche,
**dadurch gekennzeichnet, dass** das Querschnittsprofil (80) mindestens einen zu einer Seite (90) hin offenen Profilinnenraum (88) aufweist.

3. Heckanbauvorrichtung nach Anspruch 2, **dadurch gekennzeichnet, dass** ausgehend von der offenen Seite (90) der Profilinnenraum (88) hinterschneidungsfrei ausgebildet ist.

4. Heckanbauvorrichtung nach einem der voranstehenden Ansprüche,
**dadurch gekennzeichnet, dass** sich der Profilinnenraum (88) zur offenen Seite (90) hin sich erweiternd ausgebildet ist.

5. Heckanbauvorrichtung nach einem der voranstehenden Ansprüche, **dadurch gekennzeichnet, dass** das Gussteil mindestens zwei quer zueinander verlaufende und sich von einem Endbereich (44) zum anderen Endbereich (44) erstreckende Tragstegbereiche (82, 84, 86) umfasst.

6. Heckanbauvorrichtung nach einem der voranstehenden Ansprüche, **dadurch gekennzeichnet, dass** das Gussteil mindestens drei Tragstegbereiche (82, 84, 86) aufweist, die sich von einem Endbereich (44) zum anderen Endbereich (44) erstrecken.

7. Heckanbauvorrichtung nach einem der voranstehenden Ansprüche, **dadurch gekennzeichnet, dass** die Tragstegbereiche (82, 84, 86) durch Wandbereiche gebildet sind, deren Breitenausdehnung größer ist als eine Wanddicke derselben.

8. Heckanbauvorrichtung nach einem der voranstehenden Ansprüche, **dadurch gekennzeichnet, dass** mindestens einer der Tragstegbereiche (82, 84, 86) des Querschnittsprofils (80) an den Endbereichen (44) eine geringere Wandstärke aufweist als in dem Mittenbereich (70).

9. Heckanbauvorrichtung nach einem der voranstehenden Ansprüche, **dadurch gekennzeichnet, dass** der Querträger (40) in seiner Einbaulage an der Karosserie (10) zwischen den Endbereichen (44) nach oben gekrümmt ist.

10. Heckanbauvorrichtung nach einem der voranstehenden Ansprüche, **dadurch gekennzeichnet, dass** der Querträger (409 in seiner Einbaulage an der Karosserie (10) zwischen den Endbereichen (44) entgegengesetzt zur Fahrtrichtung (32) nach hinten gekrümmt ist.

11. Heckanbauvorrichtung nach einem der voranstehenden Ansprüche, **dadurch gekennzeichnet, dass** in dem Mittenbereich (70) mindestens ein Montageanschlussbereich (102, 104, 106) einstückig angeformt ist.

12. Heckanbauvorrichtung nach einem der voranstehenden Ansprüche, **dadurch gekennzeichnet, dass** an den Endbereichen (44) des Querträgers (40) Anlageflächen (48) für die Seitenträger (42) einstückig angeformt sind.

13. Heckanbauvorrichtung nach einem der voranstehenden Ansprüche, **dadurch gekennzeichnet, dass** die Anlageflächen (48) von einstückig an die Tragstegbereiche (82, 84, 86) angeformten Montagestegbereichen (46) gebildet sind.

## Claims

1. Rear attachment device for a vehicle body comprising a cross member (40) extending transversely to a longitudinal central plane (34) of the vehicle body (10), a load bearing unit (20, 22) being mounted on said member, and side members (42) held at end regions (44) of the cross member (40) for connecting the cross member (40) to the vehicle body (10),
**characterized in that** the cross member is designed as a cast part, that the cast part is formed from carrier bar sections (82, 84, 86, 88, 89) connected to one another in one piece and resulting in a cross-sectional profile (80) of the cast part open to one side (90) between the central region (70) and the end regions (44), and that the cross-sectional profile (80) varies between a central region (70) and the end regions (44), that in a first direction the cross-sectional profile (80) has less of an extension in the central region (70) than in the end regions (44).

2. Rear attachment device as defined in any one of the preceding claims, **characterized in that** the cross-sectional profile (80) has at least one internal space (88) of the profile open to one side (90).

3. Rear attachment device as defined in claim 2, **characterized in that** proceeding from the open side (90) the internal space (88) of the profile is designed to be free of any indentations.

4. Rear attachment device as defined in any one of the preceding claims, **characterized in that** the internal space (88) of the profile is designed to widen towards the open side (90).

5. Rear attachment device as defined in any one of the preceding claims, **characterized in that** the cast part comprises at least two carrier bar sections (82, 84, 86) running transversely to one another and extending from one end region (44) to the other end region (44).

6. Rear attachment device as defined in any one of the preceding claims, **characterized in that** the cast part has at least three carrier bar sections (82, 84, 86) extending from one end region (44) to the other end region (44).

7. Rear attachment device as defined in any one of the preceding claims, **characterized in that** the carrier bar sections (82, 84, 86) are formed by wall areas with a width extension greater than a wall thickness thereof.

8. Rear attachment device as defined in any one of the preceding claims, **characterized in that** the wall thickness of at least one of the carrier bar sections (82, 84, 86) of the cross-sectional profile (80) is less at the end regions (44) than in the central region (70).

9. Rear attachment device as defined in any one of the preceding claims, **characterized in that** in its mounted position on the vehicle body (10) the cross member (40) is curved upwardly between the end regions (44).

10. Rear attachment device as defined in any one of the preceding claims, **characterized in that** in its mounted positon on the vehicle body (10) the cross member (40) is curved rearwards between the end regions (44) contrary to the direction of travel (32).

11. Rear attachment device is defined in any one of the preceding claims, **characterized in that** at least one installation connection area (102, 104, 106) is integrally formed on the central region (70).

12. Rear attachment device as defined in any one of the preceding claims, **characterized in that** contact surfaces (48) for the side members (42) are integrally formed on the end regions (44) of the cross member (40).

13. Rear attachment device as defined in any one of the preceding claims, **characterized in that** the contact surfaces (48) are formed by installation bar sections (46) integrally formed on the carrier bar sections (82, 84, 86).

## Revendications

1. Dispositif de montage à l'arrière pour une carrosserie de véhicule comprenant une traverse (40) s'étendant transversalement à un plan médian longitudinal (34) de la carrosserie de véhicule (10), au niveau de laquelle une unité de réception de charge (20, 22) est montée, et des longerons (42) maintenus à des zones d'extrémité (44) de la traverse (40), au moyen desquels la traverse (40) est reliée à la carrosserie de véhicule (10),
**caractérisé en ce que** la traverse est réalisée en tant que pièce coulée, **en ce que** la pièce coulée est formée à partir de zones d'entretoise support (82, 84, 86, 88, 89) reliées l'une à l'autre d'un seul tenant, qui donnent un profil de section transversale (80) de la pièce coulée, lequel est ouvert sur un côté (90) entre la zone médiane (70) et les zones d'extrémité (44), et **en ce que** le profil de section transversale (80) varie entre une zone médiane (70) et les zones d'extrémité (44), **en ce que** le profil de section transversale (80) présente dans la zone médiane (70) dans une première direction une extension inférieure à celle dans les zones d'extrémité (44).

2. Dispositif de montage à l'arrière selon la revendication 1, **caractérisé en ce que** le profil de section transversale (80) présente au moins un espace intérieur de profil (88) ouvert sur un côté (90).

3. Dispositif de montage à l'arrière selon la revendication 2, **caractérisé en ce que** partant du côté ouvert (90), l'espace intérieur de profil (88) est réalisé sans contre-dépouille.

4. Dispositif de montage à l'arrière selon l'une quelconque des revendications précédentes, **caractérisé en ce que** l'espace intérieur de profil (88) est réalisé en s'élargissant vers le côté ouvert (90).

5. Dispositif de montage à l'arrière selon l'une quelconque des revendications précédentes, **caractérisé en ce que** la pièce coulée comprend au moins deux zones d'entretoise support (82, 84, 86) s'étendant transversalement l'une par rapport à l'autre et s'étendant d'une zone d'extrémité (44) à l'autre zone d'extrémité (44).

6. Dispositif de montage à l'arrière selon l'une quelconque des revendications précédentes, **caractérisé en ce que** la pièce coulée présente au moins trois zones d'entretoise support (82, 84, 86) qui s'étendent d'une zone d'extrémité (44) à l'autre zone d'extrémité (44).

7. Dispositif de montage à l'arrière selon l'une quelconque des revendications précédentes, **caractérisé en ce que** les zones d'entretoise support (82, 84, 86) sont formées par des zones de paroi, dont l'extension en largeur est supérieure à leur épaisseur de paroi.

8. Dispositif de montage à l'arrière selon l'une quelconque des revendications précédentes, **caractérisé en ce qu'**au moins une des zones d'entretoise support (82, 84, 86) du profil de section transversale (80) présente au niveau des zones d'extrémité (44) une épaisseur de paroi inférieure à celle dans la zone médiane (70).

9. Dispositif de montage à l'arrière selon l'une quelconque des revendications précédentes, **caractérisé en ce que** la traverse (40) est courbée vers le haut dans sa position de montage au niveau de la carrosserie (10) entre les zones d'extrémité (44).

10. Dispositif de montage à l'arrière selon l'une quelconque des revendications précédentes, **caractérisé en ce que** la traverse (40) est courbée vers l'arrière dans sa position de montage au niveau de la carrosserie (10) entre les zones d'extrémité (44) dans le sens opposé au sens de déplacement (32).

11. Dispositif de montage à l'arrière selon l'une quelconque des revendications précédentes, **caractérisé en ce qu'**au moins une zone de raccord de montage (102, 104, 106) est formée d'un seul tenant dans la zone médiane (70).

12. Dispositif de montage à l'arrière selon l'une quelconque des revendications précédentes, **caractérisé en ce que** des surfaces d'appui (48) pour les longerons (42) sont formées d'un seul tenant sur les zones d'extrémité (44) de la traverse (40).

13. Dispositif de montage à l'arrière selon l'une quelconque des revendications précédentes, **caractérisé en ce que** les surfaces d'appui (48) sont formées de zones d'entretoise de montage (46) formées d'un seul tenant sur les zones d'entretoise support (82, 84, 86).
